# EUROPEAN PATENT APPLICATION

(11) **EP 4 502 954 A1**
(43) Date of publication of application: **05.02.2025**
(21) Application number: 23189286.0
(22) Date of filing: 02.08.2023
(51) Int. Cl.: G06T 15/08

(54) **METHOD FOR USE IN RENDERING A VOLUMETRIC DATASET USING REDUCED RESOLUTION VOLUME REPRESENTATION**

(71) Applicant: Siemens Healthineers AG, 91301 Forchheim (DE)
(72) Inventor: Dr. Engel, Klaus, 90411 Nürnberg (DE)
(74) Representative: Siemens Healthineers Patent Attorneys

(57) **Abstract**

A computer-implemented method for use in rendering a volumetric dataset representing a volume is described. The method comprises: obtaining first volume data representing a first portion of the volume represented by the volumetric dataset; and obtaining second volume data representing a second portion of the volume represented by the volumetric dataset, wherein at least some of the second portion of the volume is outside of the first portion of the volume, and wherein a second data size per unit volume of the second volume data is lower than a first data size per unit volume of the first volume data. The method also comprises performing a first physically based rendering process on a combination of the first volume data and the second volume data to generate first visual parameter data for rendering the volumetric dataset.

## Description

The present invention relates to a computer-implemented method for use in rendering a volumetric dataset. The present invention also relates to a set of machine-readable instructions for implementing the method and apparatus for implementing the method.

In medical imaging, high-resolution scans allow new insights into the human anatomy and provide insights into the relation of macroscopic and microscopic structures for anatomy education and diagnosis. Modern CT scanning technologies, such as photon-counting and phase-contrast tomography, provide such high-resolution scans. These high-resolution scans produce high-resolution data, with data sizes reaching multiple gigabytes up to multiple terabytes for a single organ or body part. Rendering such data may be challenging, for example, due to limitations on host or GPU memory, particularly when using computationally intensive rendering methods such as those involving physically based rendering processes.

According to a first aspect of the present invention, there is provided a computer-implemented method for use in rendering a volumetric dataset representing a volume, the method comprising: obtaining first volume data representing a first portion of the volume represented by the volumetric dataset; obtaining second volume data representing a second portion of the volume represented by the volumetric dataset, wherein at least some of the second portion of the volume is outside of the first portion of the volume, and wherein a second data size per unit volume of the second volume data is lower than a first data size per unit volume of the first volume data; and performing a first physically based rendering process on a combination of the first volume data and the second volume data to generate first visual parameter data for rendering the volumetric dataset.

A second resolution of the second volume data may be lower than a first resolution of the first volume data. Additionally, or alternatively, a second volume data precision of the second volume data may be lower than a first volume data precision of the first volume data.

The first physically based rendering process may comprise a path tracing process.

The path tracing process may comprise, for a given path traced during the path tracing process, performing a sampling process at one or more sampling points along the given path, the sampling process comprising: selecting, at a given sampling point of the one or more sampling points, at least one of the first volume data and the second volume data; and computing, for the given sampling point, a volume value based on the selected volume data.

The selecting may be based on at least a position of the sampling point with respect to the volume.

The selecting may comprise: determining if the first volume data is available at the given sampling point; and responsive to determining that the first volume data is available at the given sampling point, selecting the first volume data; and responsive to determining that the first volume data is not available at the given sampling point, selecting the second volume data.

The selecting may be based on a count of scatter events, for the given path, between a viewpoint of the path tracing process and the given sampling point.

The path tracing process may comprise: for a or the given path traced during the path tracing process, the given path being associated with a given location in a viewing surface comprising a plurality of locations: performing a determination process to determine whether the given path is to contribute a visual parameter data contribution to visual parameter data to be stored in associated with the given location.

The determination process may comprise determining whether the given path is to contribute a visual parameter data contribution to the visual parameter data to be stored in association with the given location based on a data size per unit volume of volume data sampled at a given sampling point along the path.

The path tracing process may comprise determining an accumulated opacity value along the given path, wherein the given sampling point along the given path is a sampling point at which the accumulated opacity value along the given path meets a pre-determined opacity threshold. The determination process may comprise determining that the given path is not to contribute a visual parameter data contribution to the visual parameter data to be stored in association with the given location responsive to a determination that the data size per unit volume of volume data sampled at the given sampling point is the second data size per unit volume.

The method may comprise obtaining second visual parameter data for rendering the volumetric dataset; generating composited visual parameter data from the first visual parameter data and the second visual parameter data; and using the composited visual parameter data to generate a rendering of the volumetric dataset.

The obtaining the second visual parameter data may comprise: obtaining third volume data representing a third portion of the volume represented by the volumetric dataset; obtaining fourth volume data representing a fourth portion of the volume represented by the volumetric dataset, wherein at least some of the fourth portion of the volume is outside of the first portion of the volume, and wherein at least some of the third portion of the volume is outside of the first portion, and wherein a fourth data size per unit volume of the fourth volume data is lower than a third data size per unit volume of the third volume data; and performing a second physically based rendering process on a combination of the third volume data and the fourth volume data to generate second visual parameter data for rendering the volumetric dataset.

The first portion of the volume and the third portion of the volume may overlap one another by a pre-determined amount.

According to a second aspect of the present invention, there is provided a computer-implemented method of rendering a volumetric dataset representing a volume, the method comprising: obtaining first visual parameter data, the first visual parameter data having been generated by performing a first physically based rendering process on a combination of first volume data representing a first portion of the volume represented by the volumetric dataset and second volume data representing a second portion of the volume represented by the volumetric dataset, wherein at least some of the second portion is outside of the first portion, and wherein a second data size per unit volume of the second volume data is lower than a first data size per unit volume of the first volume data; obtaining further visual parameter data, the further visual parameter data including first further visual parameter data having been generated by performing a second physically based rendering process on a combination of third volume data representing a third portion of the volume represented by the volumetric dataset and fourth volume data representing a fourth portion of the volume represented by the volumetric dataset, wherein at least some of the fourth portion is outside of the third portion, and wherein at least some of the third portion is outside of the first portion, and wherein a fourth data size per unit volume of the fourth volume data is lower than a third data size per unit volume of the third volume data; and using the first visual parameter data and the further visual parameter data to generate a rendering of the volumetric dataset.

According to some examples, the fourth volume data is identical to the second volume data. Further, according to some examples, the fourth portion is identical to the second portion. Further, according to some examples, the fourth data size per unit volume is identical to the second data size per unit volume.

According to some examples, the second volume data represents the entirety of the volume at the second data size per unit volume.

According to a third aspect of the present invention, there is provided a set of machine-readable instructions which when executed by at least one processor cause a method according to the first aspect of the present invention or the second aspect of the present invention to be performed.

According to a fourth aspect of the present invention, there is provided apparatus comprising one or more processors and one or more storages comprising a set of machine-readable instructions according to the third aspect of the present invention.

According to a fifth aspect of the present invention, there is provided a system for rendering a volumetric dataset representing a volume, the system comprising a master compute node, and two or more further compute nodes comprising at least a first further compute node and a second further compute node; wherein the first further compute node is configured to: obtain first volume data representing a first portion of the volume represented by the volumetric dataset; obtain second volume data representing a second portion of the volume represented by the volumetric dataset, wherein at least some of the second portion of the volume is outside of the first portion of the volume, and wherein a second data size per unit volume of the second volume data is lower than a first data size per unit volume of the first volume data; and perform a first physically based rendering process on a combination of the first volume data and the second volume data to generate first visual parameter data for rendering the volumetric dataset; wherein the second further compute node is configured to: obtain third volume data representing a third portion of the volume represented by the volumetric dataset; obtain fourth volume data representing a fourth portion of the volume represented by the volumetric dataset, wherein at least some of the fourth portion of the volume is outside of the first portion of the volume, and wherein at least some of the third portion of the volume is outside of the first portion, and wherein a fourth data size per unit volume of the fourth volume data is lower than a third data size per unit volume of the third volume data; and perform a second physically based rendering process on a combination of the third volume data and the fourth volume data to generate second visual parameter data for rendering the volumetric dataset; and wherein the master compute node is configured to: obtain the first visual parameter data from the first further compute node; obtain the second visual parameter data from the second further compute node; and use the visual parameter data to generate a rendering of the volumetric dataset.

### Brief Description of the Drawings

The present invention will now be described, by way of example only, with reference to the following figures, in which:
Figure 1 is a flow chart illustrating an example computer-implemented method for use in rendering a volumetric dataset;
Figure 2 is a schematic drawing illustrating a volume represented by a volumetric dataset and aspects of a physically based rendering process performed as part of an example method for use in rendering the volumetric dataset;
Figure 3 is a schematic drawing illustrating a volumetric dataset and multiple volume data representing respective portions of the volumetric dataset;
Figure 4 is a flow chart illustrating an example computer-implemented method of rendering a volumetric dataset; and
Figure 5 is a block diagram representing, schematically, an apparatus for performing example methods described herein.

### Detailed Description

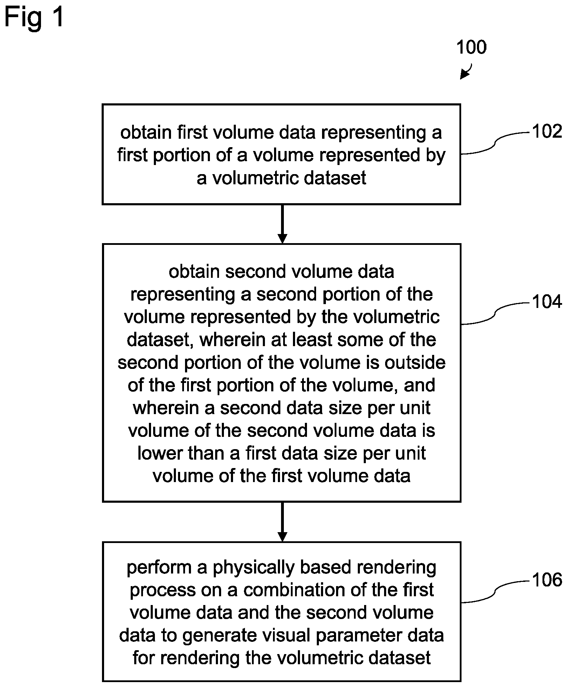

Figure 1 is a flow chart illustrating an example computer-implemented method 100 for use in rendering a volumetric dataset representing a volume.

The volumetric dataset may comprise a discrete sampling of a scalar field. The volumetric dataset may, for example, be received by loading from a memory, sensors, and/or other sources. The volumetric dataset may represent a patient or a part of a patient, for example a human or animal patient.

In general, any suitable scanning modality may be used to produce the volumetric dataset. For example, the scanning modality may comprise the use of computed tomography (CT), or of magnetic resonance imaging (MRI). In some examples a scanning modality comprising the use of positron emission tomography (PET), single photon emission computed tomography (SPECT), ultrasound, or another scan modality may be used. Scan data may be provided in the form of multiple two-dimensional (2D) scans or may be formatted from a scan. In some examples, the volumetric dataset may comprise a stack of 2D image slices. The 2D image slices may comprise compressed slice data, for example, in JPEG2000 format. In some examples, the volumetric dataset is a DICOM dataset created by scanning at least a portion of a patient using a scanning modality.

In some examples, the volumetric dataset is a large volumetric dataset produced by a high-resolution scanning modality. The volumetric dataset may, for example, have a data size of multiple gigabytes, for example, several hundreds of gigabytes, or multiple terabytes. The volumetric dataset may, for example, be produced by a high-resolution CT scanning technique, such as photon-counting or phase-contrast tomography.

The volumetric dataset may comprise data formatted as a plurality of voxels. The voxels may, for example, be in a uniform or non-uniform grid, or may be arranged in some other type of geometry (e.g., polar coordinate format). The voxels may be isotropic or anisotropic. Each voxel may typically represent a scalar value obtained by sampling a scalar field, although in some examples the volumetric dataset may comprise data relating to a non-scalar field. The type of value represented by each voxel may be dependent on the means by which the volumetric dataset is obtained. For example, where a CT scanner is used to produce the volumetric dataset, the dataset may comprise Hounsfield values. The values represented by each voxel may be represented at a given precision, for example, 8-bit or 16-bit.

In some examples, the volumetric dataset may be a dataset obtained by an imaging modality used to reveal physiological information on a cellular level, such as a sodium or CEST 7T MRI scan modality, or even on a sub-cellular level.

The method 100 comprises, at block 102, obtaining first volume data representing a first portion of the volume represented by the volumetric dataset.

The first volume data has a first data size per unit volume. The first data size per unit volume may, for example, depend on a first resolution of the first volume data and a first volume data precision of the first volume data. The first volume data precision of the first volume data is a precision at which volume data values of the first volume data are represented.

The first data size per unit volume may be a high data size per unit volume. For example, the first resolution may be full resolution of the volumetric dataset. This resolution may be referred to as the native resolution of the volumetric dataset. In one particular example, the native resolution of the volumetric dataset is 6448x6448x7170. In other examples, the first resolution may be lower than the native resolution while, for example, still being a high resolution. Similarly, the volume data precision of the first volume data may a full precision of the volumetric dataset, which may be referred to herein as the native precision. For example, the native precision may be 16 bit and the first volume data precision may also be 16 bit. In other examples, the first volume data precision of the first volume data may be higher or lower than 16 bit, for example, 32 bit or 8 bit, respectively. In the case where the native resolution is 6448x6448x7170, this provides a data size for the volumetric dataset of 555GB.

The first portion of the volume is a portion which does not include an entirety of the volume. In other words, the first volume data represents a subset of the volume represented by the volumetric dataset.

Obtaining the first volume data, at block 102, may comprise obtaining the volumetric dataset and selecting, from the volumetric dataset, a first subset of volume data representing the first portion of the volume. For example, where the volumetric dataset comprises a plurality of 2D slice images, which may be referred to as slices, obtaining the first volume data may comprise selecting, from the volumetric dataset, a first subset of the slices. In some examples, the first portion of the volume represented by the first volume data is a contiguous portion of the volume. For example, where the volumetric dataset comprises a set of slices, the first volume data may comprise a contiguous subset of the set of slices. However, in other examples, the first portion of the volume may be non-contiguous and may comprise two or more unconnected sub-portions. For example, where the volume comprises a set of slices, the first volume data may comprise non-adjacent slices. In other examples, for example, where the volumetric dataset is not made up of a set of slices, the first portion and the second portion of the volume may be defined in terms of different subsets of voxels of a set of voxels making up the volumetric dataset and representing the volume.

In examples where the first resolution and the first precision of the first volume data is the same as the native resolution and precision, the selected first subset of the volumetric dataset may directly form the first volume data. If, then, for example, the first volume data has the native resolution and native precision and the first portion of the volume represented by the first volume data is half of the volume represented by the volumetric dataset, the total data size of the first volume data will be half that of the volumetric dataset.

However, in examples where the first resolution is lower than the native resolution of the volumetric dataset and/or the first precision of the first volume data is lower than the native precision, obtaining the first volume data may comprise converting a portion of the volumetric data representing the first portion of the volume from the native resolution or precision to the lower, first resolution or first precision, which, as above, may nevertheless still be a high resolution/precision. For example, the selected first subset of the volumetric dataset may be converted to a lower resolution to generate the first volume data by use of a downsampling process or a binning process. Additionally, or alternatively, the volumetric dataset may be quantized to reduce the volume data precision from the native precision. In other examples, the first volume data may have already been converted from the native resolution and precision to the first resolution and precision prior to the obtaining of the first volume data at block 102. For example, downsampling or binning of the first subset of the volumetric dataset may be performed by a different computing device than that which obtains the first volume data at block 102.

At block 104, the method 100 comprises obtaining second volume data representing a second portion of the volume represented by the volumetric dataset. At least some of the second portion of the volume is outside of the first portion of the volume. The second volume data has a second data size per unit volume lower than the first data size per unit volume.

In one example, the second portion of the volume is the entirety of the volume. As such, in such examples, the second volume data represents the entirety of the volume at the second data size per unit volume, which, as described above, is lower than the first resolution. The second data size per unit volume may be lower than the first data size per unit volume due to, for example, a second resolution of the second volume data being lower than the first resolution of the first volume data and/or a second volume data precision of the second volume data being lower than the first volume data precision of the first volume data. As an example, the second resolution may be lower than the first resolution while the second volume data precision is the same as the first volume data precision. As another example, the second resolution may be the same as the first resolution while the second volume data precision is lower than the first volume data precision. As yet another example, both the second resolution and the second volume data precision may be lower than the first resolution and first volume data precision, respectively. In some examples, the second resolution may be substantially lower than the native resolution of the volumetric dataset, for example, the second resolution may be half, a quarter, or an eighth of the native resolution of the volumetric dataset. In such an example, the second volume data precision may, for example, be the same as the first volume data precision or lower than, for example, half of, the first volume data precision.

Obtaining the second volume data may comprise any of the features described above with reference to the obtaining of the first volume data, at block 102.

For example, obtaining the second volume data may comprise obtaining the volumetric dataset, selecting a second subset of the volumetric dataset representing the second portion of the volume, and converting the second subset of the volumetric dataset to the second data size per unit volume. As above, the second portion of the volume may be the entirety of the volume. As such, in such an example, obtaining the second volume data may comprise converting the entirety of the volumetric dataset to the second data size per unit volume. For example, obtaining the second volume data may comprise performing a downsampling process or binning process on the volumetric data to generate a lower resolution representation of the volume and/or quantizing the data to reduce the volume data precision.

In other examples, similarly to as described above with respect to the first volume data, obtaining of the second volume data may comprise obtaining the second volume data at the second data size per unit volume.

In some examples, the second volume data may comprise a 3D texture array. For example, where the volumetric dataset comprises a set of slices, the first volume data may comprise a 2D texture array representing the first portion of the volume, for example, at the native resolution and precision, while the second volume data comprises a 3D texture array representing the entirety of the volume at the lower, second resolution and/or precision.

At block 106, the method 100 comprises performing a first physically based rendering process on a combination of the first volume data and the second volume data to generate first visual parameter data for rendering the volumetric dataset. The physically based rendering process may, for example, be a path tracing process.

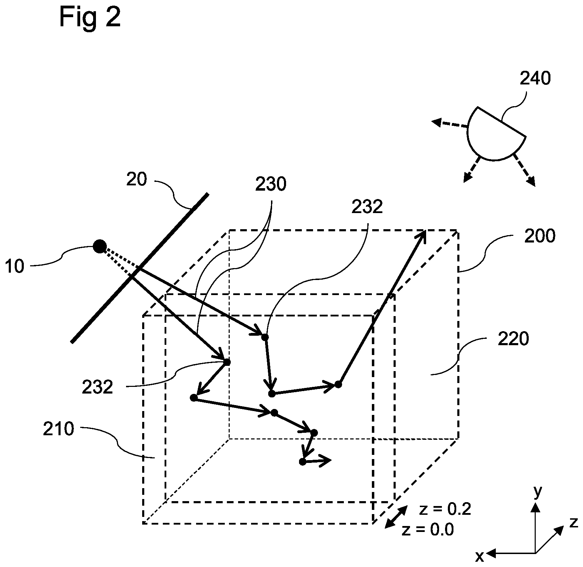

Referring now to Figure 2, there is illustrated schematically an example of the first physically rendering process performed on a combination of first volume data and second volume data. The first volume data and the second volume data represent, respectively, a first portion 210 and a second portion 220 of a volume 200 represented by a volumetric dataset. The first volume data and the second volume data are in registration with one another with respect to the volume 200. The volume 200 represented by the volumetric dataset in this example has cuboidal geometry.

In this example, the first portion 210 is a layer in a z-direction of the volume 200. In this example, the first portion 210 is a layer in the z-direction from z = 0.0 to z = 0.2. The second portion 220 is an entirety of the volume 200 and the second volume data represents the entirety of the volumetric dataset at the second resolution.

The first volume data and the second volume data are obtained as described above in accordance with blocks 102 and 104, respectively, of the example method 100. The first physically based rendering process forms part of an example method of rendering the volumetric dataset. In the example of Figure 2, the first physically based rendering process is a path tracing process.

In the path tracing process represented by Figure 2, a viewpoint 10 is defined with respect to the volume 200. A viewing plane 20 is located in front of the viewpoint 10. The viewing plane 20 comprises a plurality of locations, for example, pixels (not shown in Figure 2), and allows construction of a visualization of the volume 200, as viewed from the viewpoint 10. The pixels may, for example, be arranged in a grid in the viewing plane 20.

In the path tracing process represented by Figure 2, to obtain visual parameter data to be used to render a visualization of the volume 200 as viewed from the viewpoint 10, a plurality of simulated paths 230 through the volume 200 are determined. Each of the paths may be used to determine a contribution to a visual parameter value for a given pixel in the viewing plane 20. The visual parameter value may, for example, include a color value for the given pixel.

Path tracing simulates light propagation through the volume 200, including simulating scattering and absorption, by tracing a plurality, for example millions, of simulated light paths 230. Each of the paths 230 may be used to generate a contribution to a visual parameter value for a given pixel in the viewing plane 20. The contributions may be used to determine an estimate of the light hitting the given pixel. The contribution for a given path 230 may be determined by sampling, at a plurality of sampling points along the given path 230, the volume data on which the rendering process is being performed, which in this case is the combination of the first volume data and the second volume data. The sampling points along the given path 230 may, for example, be substantially equidistantly spaced along the path 230. By averaging many such estimates obtained from many simulated paths 230 for a given pixel in the viewing plane 20, visual parameter data may be obtained for the pixel. By repeating this process for each of the pixels in the viewing plane 20, visual parameter data may be accumulated for allowing an image from the perspective of the viewpoint 10 to be rendered on the viewing plane 20.

According to an example, for a given path 230 associated with a given pixel in the viewing plane 20, to determine an initial direction of the path 230, a pseudo-random position in the given pixel may be determined. The initial direction for the path 230 may then be generated by connecting the pseudo-random position in the given pixel with a pseudo-random position on a simulated camera lens (not shown) at the viewpoint 10. The intersection of the path 230 with a bounding box of the volume 200 is then computed. The path 230 is then traced through the volume 200 and sampled in the manner described above.

Scatter events along the path 230 are simulated, for example, by Woodcock tracking or, for example, by accumulating opacity along the path 230 and triggering a scatter event when the opacity exceeds a scatter event threshold. When a scatter event occurs along the path 230, the path 230 is continued by determining a new ray originating at a scattering position 232. The new ray following a first scatter event along a given path 230 may be referred to as the secondary ray, while the ray prior to the first scatter event along the given path 230 is referred to as the primary ray. In Figure 2, scattering positions are represented by a solid dot along the paths 230. For clarity, for each of the paths 230, only a first scattering position 232 is labelled. A direction of the new ray may, for example, be determined using a phase function, that is, a probability density function for the scattering direction, at the scattering position 232. The phase function may, for example, be determined based on a sampled volume value (for example, where the volumetric dataset is produced by CT scanning, a Hounsfield value) at the scattering position 232.

The new ray is traced in a similar manner to the initial ray to determine the next scattering position, if any, for the path 230. The same operations are performed at the next scattering position as at the first scattering position 232. This path tracing process continues until a ray of the path 230 leaves the volume 200 or is absorbed by the volume 200. Absorption by the volume 200 can be modelled, for example, by using a maximum threshold for the number of scattering events, or probabilistically by using an extinction probability density function based on the number of scattering events. In one example, a Russian Roulette algorithm may govern extinction of the path 230 by, pseudo-randomly determining at each scattering position whether to continue or to terminate the path 230. In yet another example, an accumulated opacity may be determined along the path 230 and the path 230 may be terminated when the accumulated opacity reaches a probabilistic threshold, computed from a probability density function (PDF). If the path 230 leaves the volume 200 before being terminated, a visual parameter value contribution for the path 230 may be determined. On the other hand, if the path 230 is terminated before leaving the volume 200, no visual parameter data value contribution is computed, and the path 230 makes no contribution to the visual parameter data of the pixel to which it corresponds.

A sampling process is performed at a plurality of sampling points (not shown) along the given path 230. At a given sampling point along the path 230, the sampling process provides a volume value for the sampling point. The volume value may be used, as described below, to obtain visual parameter data for the sampling point, for example, by use of a transfer function. The sampling process may comprise interpolating a volume value for the sampling point from the first volume data and/or the second volume data, for example, using tri-linear interpolation.

In some examples, the sampling process may comprise selecting, at the given sampling point, at least one of the first volume data and the second volume data and computing the volume value for the given sampling point based on the selected volume data. The sampling process may be based on at least a position of the sampling point with respect to the volume 200. For example, in some examples, the sampling process may comprise selecting the volume data with the highest data size per unit volume, for example, the highest resolution volume data, which is available at the sampling point. For example, the sampling point may be at a position in the volume 200 at which both the first volume data and the second volume data are available. For example, in the example of Figure 2, for a sampling point in the first portion 210 of the volume 200, that is, from z=0.0 to z=0.2, both the first volume data and the second volume data are available. In such an example, the sampling process may comprise selecting the first volume data for the sampling point in the first portion 210 of the volume 200.

The use of the volume data with the highest data size per unit volume at the sampling point may allow for a more accurate volume value to be determined for the sampling point, and therefore allow for high-quality visual parameter data to be obtained for the sampling point. For example, the use of the highest resolution volume data available at the sampling point to obtain the volume value for the sampling point may, for example, allow for the volume value at the sampling point to be interpolated from values which are closer to the sampling point than when interpolating from volume data having a lower resolution.

For a sampling point at which the first volume data is not available but at which the second volume data is available, for example, a sampling point in the volume 200 which is outside of the first portion 210 of the volume 200 (in the example of Figure 2, outside of the range z=0.0 to z=0.2), the second volume data may be selected.

Accordingly, for a sampling point which is outside of the first portion 210 of the volume 200 where the first volume data is available, but which is inside of the second portion of the volume 200, volume values may be obtained at the lower, data size per unit volume. Where, as in the example shown in Figure 2, the second volume data represents an entirety of the volume 200, a volume value may be obtained from the second volume data for a sampling point at any position within the volume 200, including a position in the first portion of the volume 200.

For a given sampling point along the path 230, once the volume value for the sampling point has been obtained, a classification process may be performed to obtain visual parameter data for the sampling point based on the volume value. The visual parameter data may, for example, comprise a color and/or an opacity. The visual parameter data may comprise both a color and an opacity, for example, an RGBA value. Performing the classification process may comprise applying a transfer function to the volume value for the sampling point. For example, a color may be computed for the sampling point by using the volume value for the sampling point to look up a color value from a color map. The color map may be window-levelled. That is, the color map may be mapped to an appropriate, for example, a pre-defined or user-controlled, range of values of volume data in order to provide the desired mapping of colors to values of the volume data. Similarly, an opacity, which may also be referred to as an alpha value, for the sampling point may be computed by performing a look-up using the volume value, or the opacity may be obtained as part of the same look-up used to obtain the color value.

In examples, a rendering algorithm may model an illumination effect by modelling a light source 240 illuminating the volume 200. The illumination effect may be taken into account when determining opacity and color values at the sampling points. For example, a shading computation may be applied at the sampling point, taking into account simulated light at the sampling point. The light source 240 may be a point source, a directional light source, or may comprise a light map. In some examples, the light source may comprise a high-definition light map. The light map may, for example, when the volume 200 is cuboidal, have six sides corresponding to outer sides of the volume 200. In some examples, the simulated light source 240 may be a model of a light-emitting object, or a combination of models of multiple, for example, different, light sources. In some examples, parts of the volume 200 itself may emit light.

The process of obtaining visual parameter data may be performed for each of the sampling points along the path 230. The visual parameter data gathered at each of the sampling points along the path 230 may be used to generate the visual parameter data contribution for the path 230. For example, visual parameter data obtained at each of the sampling points may be accumulated along the path 230 to provide the visual parameter data contribution for the path 230.

The visual parameter data contribution for the path 230 may then be stored in association with the pixel to which the path 230 corresponds. The visual parameter data contribution may be stored in a buffer, for example, a high dynamic range (HDR) buffer. The procedure may be repeated many times for the given pixel by tracing many paths to obtain many corresponding visual parameter data contributions for the given pixel.

In some examples, a determination process may be performed to determine whether the given path 230 is to contribute a visual parameter data contribution to visual parameter data to be stored in associated with the given location. For example, the determination process may be performed to determine whether a path should contribute a visual parameter data contribution to be stored in the buffer in association with given pixel to which the given path corresponds.

In some examples, the determination process may be based on a data size per unit volume of the volume data sampled at a given sampling point along the given path 230. For example, the determination process may involve determining to store in the buffer only visual parameter data contributions of paths for which at least one sampling point along the path uses volume data from the higher data size per unit volume, first volume data. This may provide for higher quality visual parameter data to be stored for the given location by discarding paths which only use the lower resolution and/or lower precision, second volume data and which therefore may be of lower quality.

The determination process may be performed at each sampling point along the given path 230. The determination process may, for example, comprise, at a given sampling point along the given path 230, determining whether to continue with or to discard the path 230 based on an accumulated opacity value along the path 230 at given the sampling point. For example, the path tracing process may comprise computing an opacity value at each sampling point along the given path and maintaining an accumulated opacity value along the given path 230. At each given sampling point, an opacity value may be computed, as described above, and an accumulated opacity value for the path 230 may be updated by adding the opacity value for the given sampling point. The accumulated opacity value may then be compared with a pre-determined opacity threshold. If the accumulated opacity value exceeds the opacity threshold, then a check may be made of whether the sampling point sampled volume data from the first volume data or from the second volume data. If the given sampling point sampled volume data from the first volume data, then the path 230 may be continued. If, on the other hand, the given sampling point sampled volume data from the second volume data, then the path 230 may be terminated.

In one such example, the opacity threshold is 0.0, such that the determination process involves only continuing with paths for which a first non-transparent sampling point along the path uses volume data from the first volume data. In other examples, the opacity threshold may be greater than 0.0, for example, 0.1 or 0.2.

Determining whether to continue with or discard a path in this way may allow for higher quality visual parameter data contributions to be generated and stored for the given location. For example, since the first non-transparent sampling point, or the first few non-transparent sampling points, for a given path, may have the greatest influence on the visual parameter data contribution provided by the given path, it may be advantageous to select paths which use the higher data size per unit volume first volume data for these sampling points. These sampling points typically lie on the primary ray since typical path tracing models do not result in scattering events occurring prior to the primary ray encountering non-transparent volume data. Accordingly, by discarding paths which take these sampling points from the lower data size per unit volume, second volume data, paths with low quality primary rays may be discarded. Since only paths which are not discarded can leave the volume 200 and generate a visual parameter data contribution for their associated pixel, this may allow for higher quality visual parameter data contributions to be generated and stored in the buffer.

The procedure of obtaining visual parameter data contributions from a plurality of paths may be repeated for each of the pixels in the viewing plane 20, resulting in visual parameter data being stored in the buffer in association with each pixel in the viewing plane 20.

In this manner, visual parameter data may be obtained for rendering at least a portion of the volume 200 represented by the volumetric dataset at high quality without requiring the rendering process to be performed on the volumetric dataset at the native resolution. Since at least the second volume data is at a data size per unit volume resolution which is less than the native data size per unit volume, the combination of the first volume data and the second volume data may occupy less storage space than that occupied by the entire volumetric dataset at the native data size per unit volume. Accordingly, for example, the combination of the first volume data and the second volume data may in some examples be of a size that it can be held in memory by a rendering apparatus when this may not be possible for the entire volumetric dataset due to its size. For example, the combination of the first volume data and the second volume data may be small enough to be loaded into the memory of a GPU when this is not possible for the entire volumetric dataset at the native data size per unit volume.

Since the physically based rendering process is performed on the combination of the first volume data and the second volume data, high quality visual parameter data can be obtained for rendering at least the first portion of the volume represented by the volumetric dataset. For example, since the second volume data represents a second portion 220 of the volume 200 including at least a part of the volume 200 outside of the first portion 210, visual parameter data representing the first portion 210 of the volume 200 may be computed taking into account effects due to scattering of light outside of the first portion 210 of the volume 200. These effects may be referred to as global illumination effects. Generating such effects may require access to data representing points in a scene which are distant from the point for which shading is being computed to compute the shading for a particular point in a scene and therefore it may be advantageous to have volume data representing the entire volume 200 when generating such effects. However, the entire volumetric dataset may be too large to hold in memory. Examples of present method may allow for such effects to be generated while reducing the amount of data needed to be held in memory to do so. Moreover, the rendering results generated may be close or comparable to those which would be produced by rendering the entire volumetric dataset at the native resolution and precision.

For example, samples for primary rays may be taken wholly or primarily from the higher data size per unit volume first volume data while samples for scattered rays may be taken from the first volume data or the second volume data. For example, at a given sampling point along a scattered ray, the volume value may be interpolated from the volume data with the highest data size per unit volume which is available at the given sampling point. For this reason, the second volume data may, in some examples, be referred to as scatter volume data. Although samples along such scattered paths may be taken from a lower data size per unit volume representation of the volumetric dataset, high quality visual parameter data may nevertheless be obtained. For example, samples along the primary ray, which may influence the quality of the visual parameter to a greater degree than samples along scattered paths, may be taken from the higher data size per unit volume first volume data.

To render the volumetric dataset, a tone-mapping pass may be applied to the visual parameter data stored in the buffer. The visual parameter stored in the buffer for a given pixel may, as described above, comprise a plurality of visual parameter data contributions, each contribution having been generated by tracing a particular path associated with the given pixel. The visual parameter data contributions stored in the buffer for a given pixel may be averaged or otherwise used to generate overall visual parameter data values for the given pixel. The tone-mapping pass may be performed repeatedly as the number of paths 230 traced and stored in the buffer increases. Accordingly, the image may be progressively refined as the number of paths 230 traced increases.

In an example rendering method, the procedure of blocks 102 to 106 described above is performed to produce first visual parameter data for use in rendering the volumetric dataset. This first visual parameter data may be stored in the buffer to be used to render an image of the volume 200. The first visual parameter data may comprise one or more visual parameter data contributions for each of one or more locations, for example, pixels, in an image to be rendered. A procedure according to blocks 102 to 106 may then be performed one or more further times to generate further visual parameter data for use in rendering the volumetric dataset. This further visual parameter data may also be stored in the buffer, in combination with the first visual parameter data, and used to generate the image of the volume 200. The further visual parameter data may, similarly to the first visual parameter data, comprise one or more visual parameter data contributions for each of one or more locations in the image to be rendered.

Each time the procedure of blocks 102 to 106 is performed, a portion of the volume 200 represented by the volumetric dataset is represented by volume data at a higher data size per unit volume while another portion of the volume 200 is represented by volume data at a lower data size per unit volume, similarly to how the first volume data represents the first portion 210 of the volume 200 at the first data size per unit volume and the second volume data represents the second portion 220 at the second data size per unit volume which is lower than the first data size per unit volume. Each time the procedure is performed, the portion of the volume 200 represented at the higher data size per unit volume may be at least partially different. The portion of the volume 200 represented at the lower data size per unit volume may be the same or different each time the procedure is performed, but in each case will be at least partially outside of the portion of the volume 200 which is represented at the higher data size per unit volume. The higher data size per unit volume and the lower data size per unit volume may be the same each time the procedure is performed. For example, the volume data at the higher data size per unit volume may be at the native resolution and precision of the volumetric dataset while the volume data at the lower data size per unit volume may be a particular resolution and precision to which the volumetric dataset may have been downsampled or quantized. As an example, the volume data at the lower data size per unit volume used each time the procedure is repeated may be the same scatter volume data representing the entirety of the volume 200 at the second data size per unit volume. In other examples, at least one of the higher data size per unit volume and the lower data size per unit volume may differ between times when the procedure is performed.

In this manner, each time the procedure is performed visual parameter data may be obtained for rendering a different portion of the volume 200 at high quality while allowing global illumination effects to be simulated. This visual parameter data may be stored in the buffer, and thereby visual parameter data allowing the entirety of the volume 200 to be rendered at high quality including global illumination effects can be obtained and stored in the buffer. By performing a tone-mapping pass on the visual parameter data stored in the buffer, a high-quality rendering of the entirety of the volume 200 may thereby be obtained.

Accordingly, example methods described herein may allow for the volumetric dataset to be rendered at high quality, including the simulation of global illumination effects, while reducing the amount of data to be held in memory at any one time by a rendering apparatus used to generate the visual parameter data for the rendering. This is done by allowing the volume represented by the volumetric dataset to be rendered portion-by-portion at high resolution while, for each portion, providing scatter volume data which allows for the simulation of global illumination effects. This may allow for rendering of large volumetric datasets, using physically based rendering techniques, by an apparatus which may not otherwise be capable of performing such rendering, due to the size of the volumetric dataset.

In some examples, volumetric dataset may be rendered by a single rendering apparatus, one portion after another, with the results from each rendering process being accumulated in the buffer. In some such examples, scatter volume data representing the entirety of the volumetric dataset at low data size per unit volume, may be obtained and held in memory while a portion of the volumetric dataset represented at high data size per unit volume is loaded into memory and a physically based rendering process is performed on the combination of the high-data-size-per-unit-volume portion and the scatter volume data to obtain visual parameter data. The same scatter volume data may be held in memory while this process is repeated in turn for each of the high-data-size-per-unit-volume portions of the volume. The rendering apparatus may then use the accumulated visual parameter data in the buffer to render an image of the volume, for example, by applying a tone-mapping pass, as described above.

In other examples, the visual parameter data for rendering the volumetric dataset may be produced by multiple rendering apparatuses, each of which may produce visual parameter data for one or more different portions of the volume represented by the volumetric dataset. In one example, each of the rendering apparatuses may obtain the same scatter volume data and a single, different, high-data-size-per-unit-volume portion of the volumetric dataset. The visual parameter data produced by the multiple rendering apparatuses may be accumulated in a single buffer and rendered in a similar manner to in the case where a single rendering apparatus generates all of the visual parameter data. The buffer may, for example, be held by one of the multiple rendering apparatuses which performs a process of generating the visual parameter data and which, along with the visual parameter data it generates, obtains the visual parameter data generated by all of the other apparatuses and stores all of the visual parameter data in the buffer. Alternatively, a rendering apparatus other than the multiple rendering apparatuses which generate the visual parameter data may obtain the visual parameter data from the multiple rendering apparatuses and store the data in the buffer.

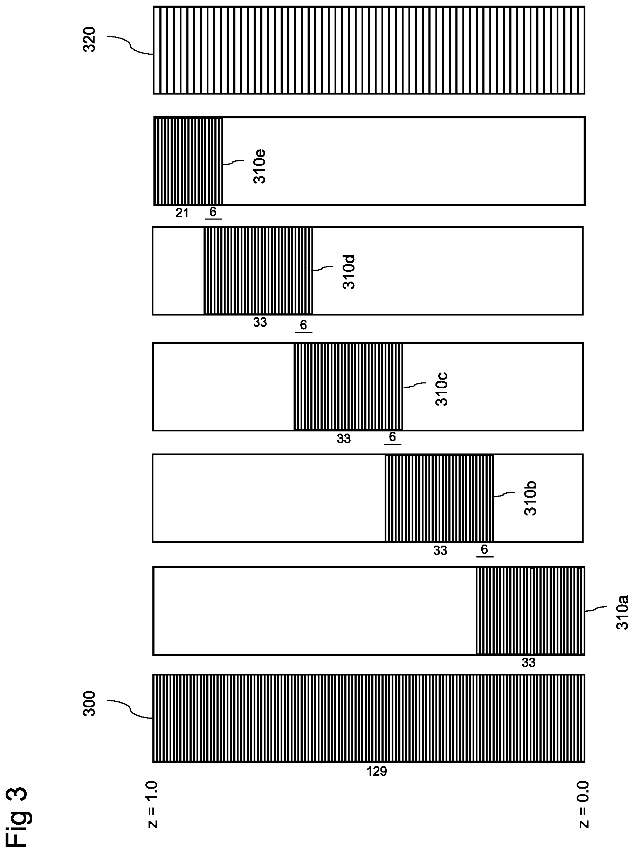

Figure 3 is a schematic drawing showing a simplified example of a volumetric dataset 300 at a native resolution and volume data representing different portions of the volumetric dataset 300 at different resolutions for rendering the volumetric dataset according to an example method as described above. In this example, the volumetric dataset 300 at the native resolution comprises 129 slices in the form of JPEG2000 images. In other examples, the number of slices may be different, for example, far higher. For example, in an example where the native resolution of the volumetric dataset is 6448x6448x7170, the precision of the volumetric dataset is 16 bit and the size of the volumetric dataset 300 is 555GB, the volumetric dataset 300 may rendered using around 25 to 30 layers. The number of layers or, generally, the size of the different portions of the volumetric dataset 300 may be configured based on the memory of the rendering apparatus or apparatuses to be used. For example, the number of layers may be configured such that a single layer and the scatter volume data can be held in memory by a single rendering apparatus.

Each slice is a 2D image aligned with an x-y plane of the volume represented by the volumetric dataset, at a particular z position, where the volume extends from z = 0.0 to z = 1.0. Portions of the volume are represented by high-resolution first volume data 310a-310e, in this example referred to as layers 310a-310e. In this example, the layers 310a-310e each represent a respective portion of the volume at the native resolution and precision. Scatter volume data 320 represents the entirety of the volume at the native precision but at a resolution lower than the native resolution. The resolution of the scatter volume data 320 may, for example, be half the native resolution, resulting in the scatter volume data 320 being 8 times smaller than the volumetric dataset 300 at the native resolution, or a quarter of the native resolution, resulting in the scatter volume data 320 being 64 times smaller than the volumetric dataset 300 at the native resolution, or an eighth of the native resolution, resulting in the scatter volume data 320 being 512 times smaller than the volumetric dataset 300 at the native resolution. Additionally, or alternatively, the data size of the scatter volume data 320 may be smaller than the volumetric dataset 300 at the native resolution due to the scatter volume 320 having a lower volume data precision than the native precision. For example, the volumetric dataset 300 may represent values at 16-bit precision while the scatter volume data 320 represents values at 8-bit precision, resulting in the data size of the scatter volume data 320 being half that of the volumetric dataset 300 for the same resolution. The reduction in precision may be achieved by quantizing the data of the volumetric dataset 300.

In the example of Figure 3, each layer 310a-310e includes a respective contiguous subset of the 129 slices of the volumetric dataset 300 representing a contiguous portion in the z-direction of the volume. Specifically, the first four layers 310a-310d each comprise 33 consecutive slices of the 129 slices of the volumetric dataset 300 while the final layer 310e comprises 21 slices of the 129 slices of the volumetric dataset 300. Adjacent layers of the layers 310a-310e overlap one another, in this example, by 6 slices. Accordingly, with the slices numbered from 0 to 128, increasing in the z direction, the first layer 310a includes slices 0 to 32 while the second layer 310b includes slices 27 to 59, and so on for the third 310c, fourth 310d and fifth 310e layers.

In an example, to render the volumetric dataset 300, a rendering apparatus obtains the first layer 310a, for example, by selecting the first 33 slices of the 129 slices of the volumetric dataset 300. The first layer 310a is loaded into memory by the rendering apparatus. The rendering apparatus also obtains the scatter volume data 320, for example, by downsampling and/or quantizing the volumetric dataset 300 or by obtaining an already downsampled and/or quantized version of the volumetric dataset 300. The scatter volume data 320 is also loaded into memory by the rendering apparatus. The rendering apparatus then performs a physically based rendering process on the combination of the first layer 310a and the scatter volume data 320, in the manner described above with reference to Figures 1 and 2. The visual parameter data generated by the physically based rendering process is stored in a floating point HDR buffer.

The rendering apparatus performs a similar procedure to generate respective visual parameter data by performing a physically based rendering process on a combination each of the second to fifth layers 310b to 310e with the scatter volume data 320. This visual parameter data is stored in the HDR buffer along with the visual parameter data generated based on the combination of the first layer 310a and the scatter volume data 320. The rendering apparatus therefore renders the combinations of the first to fifth layers 310a to 310e with the scatter volume data 320 in series, layer-by-layer. During rendering, each layer 310a-310e may be streamed in turn from host memory or storage, for example, hard disk or SSD. A random number seed used during the physically based rendering process may be reset to the same value at the start of rendering each layer 310a-e. This may help avoid differences in the rendering result due to the volumetric dataset 300 being rendered layer-by-layer.

The rendering apparatus performs a tone-mapping pass on the visual parameter data stored in the HDR buffer to render an image of the volumetric dataset 300. This tone-mapping may be repeatedly performed to update the rendered image as the processing proceeds.

Since the layers 310a-310e overlap one another, continuous interpolation of volume values is provided for, including at inter-layer interfaces. This allows for more sampling points to be taken from the volume data at boundaries between layers. This may provide for artifacts on resolution boundaries, which might occur if such an overlap was not present, to be suppressed. The amount by which the layers 310a-310e overlap may be configurable, for example, as a number of slices or a number of voxels. The amount by which the layers 310a-310e overlap one another may be the same for each pair of adjacent layers or may vary between different pairs of layers.

A 2D texture array may be used for the layers 310a-310e while a 3D texture may be used for the scatter volume data 320.

This may allow for streaming and interpolation of individual native resolution slices to be better controlled. Streaming and interpolation along the z-direction may then be performed explicitly during the physically based rendering process, for example, in the shader.

In certain examples, acceleration techniques may be employed to improve the efficiency of the rendering process. For example, during rendering of the first layer 310a, pixels for which simulated primary rays will never intersect the first layer 310a can be skipped over. Additionally, or alternatively, frustum culling may be employed to prevent loading into memory and rendering of layers that are not visible by primary rays.

If a single rendering apparatus is used to render the volumetric dataset, interactive performance may be achieved by using only the scatter volume data 320 to render the volumetric dataset 300 during interaction, for example, while the viewpoint is being changed or the transfer function or other parameters of the rendering are being adjusted. In this way, no data relating to the layers 310a-310e is streamed during the rendering and thus no delay due to input/output is introduced during interaction. In some examples, on the interaction ceasing, an example method of rendering the volumetric dataset 300 based additionally on the higher resolution layers 310a-310e can automatically be triggered, or, alternatively, such a method may be triggered explicitly by a user.

In some examples, examples of the present method may use compression domain rendering techniques. This may involve storing and/or streaming compressed slices, such as JPEG2000 encoded slices. Decompression of the image data may use GPU acceleration techniques, for example, nvJPEG, to produce the volume layers for rendering. Compressed slices could be streamed or stored in GPU or host memory and decompressed for rendering on demand.

In another example, the rendering of the respective combinations of the first to fifth layers 310a to 310e may be performed in parallel by different rendering apparatuses with the visual parameter data generated by the different rendering apparatuses being accumulated in an HDR buffer for rendering an image of the volumetric dataset 300. Each rendering apparatus may, for example, have its own HDR buffer in which the generated visual parameter data is stored before being collected by a master rendering apparatus for compositing into an HDR buffer of the master rendering apparatus for tone mapping and display.

Example methods according to the present disclosure may allow for physically based rendering of high-resolution data to be performed by any single computer or by a rendering cluster, independently of host and GPU memory limitations. Additionally, legacy machines may use a method according to the present disclosure to handle arbitrarily larger volume data without upgrading hardware.

For example, when compared with data reduction methods, which may involve compressing or cropping the volumetric dataset to reduce its size and allow the data to be held in memory by a rendering apparatus, the present method may allow for higher quality rendering results since the entirety of the volumetric dataset may be rendered at high resolution and precision.

Moreover, other rendering methods, such as multi-resolution rendering, compression domain rendering, distributed memory rendering, parallel rendering and bricking, may be complex to implement when using physically based rendering processes. For example, such methods may involve the use of complex distributed memory architectures for computing global illumination information. Examples of the present method, on the other hand, may reduce the need for such complex distributed memory architectures. Moreover, examples of the present method may help avoid the need for elaborate pre-processing of volume data which is typically performed in multi-resolution or texture compression methods. Examples of the present method may, for example, allow for volume data to be rendered directly from compressed slice data (for example, JPEG2000 data) .

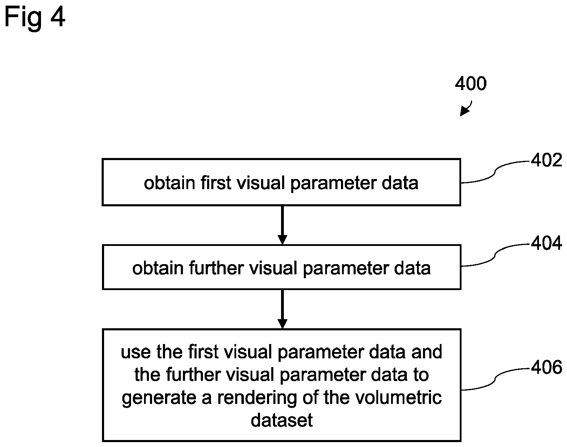

Figure 4 is a flow chart showing a computer-implemented method 400 of rendering a volumetric dataset. The method 400 comprises, at block 402, obtaining first visual parameter data obtained according to any example method described above. For example, with reference to Figure 3, the first visual parameter data may comprise visual parameter data generated by performing a physically based rendering process on the combination of the first layer 310a and the scatter volume data 320.

At block 404, the method 400 comprises obtaining further visual parameter data generated according to any example method described above. For example, again with reference to Figure 3, the further visual parameter data may comprise first further visual parameter data generated by performing a physically based rendering process on the combination of the second layer 310a with the scatter volume data 320. The further visual parameter data may also comprise second, third and fourth further visual parameter data generated by performing respective physically based rendering processes on combinations of the third layer 310c, fourth layer 310d and fifth layer 310e with the scatter volume data 320.

Blocks 402 and 404 may comprise a single rendering apparatus generating the first visual parameter data and the further visual parameter data, for example, portion-by-portion, in the manner described above. Alternatively, blocks 402 and 404 may be performed by a rendering apparatus which does not generate one or more of the first visual parameter data and the further visual parameter data. For example, the method 400 may be performed by a system comprising a plurality of rendering apparatuses. Each of the rendering apparatuses in the system may be referred to as a node and the system may be referred to as a compute cluster. In some such examples, one node in the compute cluster may act as what may be referred to as a master node. The master node may perform the method 400. For example, each of the nodes, excluding the master node, in the compute cluster may generate visual parameter data by performing a path tracing process on a different combination of high-data-size-per-unit-volume data and lower data-size-per-unit-volume data. To render the volumetric dataset 300 shown in Figure 3, for example, each node excluding the master node may generate visual parameter data by performing a path tracing process on a combination of one of the layers 310a-310e with the scatter volume data 320. The visual parameter data generated by the nodes may then be collected by the master node. In one such example, the number of nodes, excluding the master node, is equal to the number of layers 310a-310e. In other examples, the master node may itself generate visual parameter data relating to one of the layers 310a-310e. For example, the master node may generate the first visual parameter data at block 402 and obtain the further visual parameter data from one or more other nodes at block 404.

At block 406, the method 400 comprises using the first visual parameter data and the further visual parameter data to generate a rendering of the volumetric dataset. This may comprise any of the relevant features described above. For example, the first visual parameter data and further visual parameter data may be composited in an HDR buffer. A tone-mapping pass may then be performed to render an image from the composited visual parameter data stored in the HDR buffer.

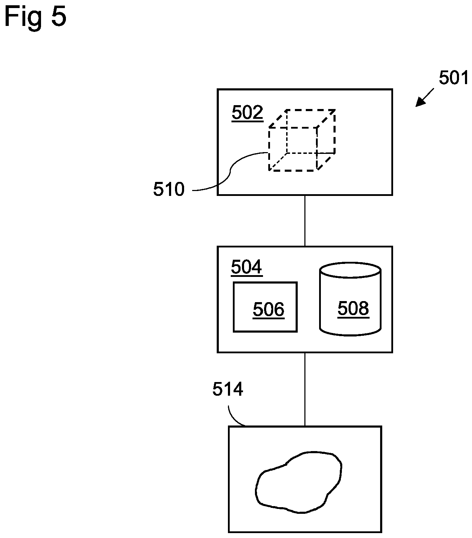

Figure 5 is a schematic drawing illustrating an example system 501 in which an example apparatus 504 may use methods described herein. The system 501 comprises a scanner 502, the apparatus 504, and a visualization unit 514. In examples, the system may comprise fewer components than or additional components to those illustrated in Figure 5. For example, the system 501 may comprise a computer network such as the internet.

The scanner 502 may be any scanner for generating a dataset comprising a volumetric dataset 510, which may, for example, be a medical volumetric dataset representing a portion of a patient. The scanner 502 may be a computed tomography (CT) scanner, a magnetic resonance imaging (MRI) scanner, a positron emission tomography (PET) scanner, an ultrasound scanner or the like. The scanner 502 is connected to the apparatus 504, for example via wired or wireless connection. The scanner 502 may be arranged to provide the volumetric dataset 510 to the apparatus 504.

The apparatus 504 comprises one or more processors 506 and a memory, in the form of one or more storages 508. The apparatus 504 may, for example, comprise a GPU. In this example, the apparatus 504 is arranged to perform a method according to examples described above of rendering a visualization of the volumetric dataset 510. The apparatus 504 may for example, comprise one or more processors for performing the various aspects of the method.

The storage 508 may comprise a machine-readable medium comprising a set of machine-readable instructions which when executed by the processor 506 cause the apparatus 504 to perform an example method described herein. The program may be stored on a computer readable medium which may be read by the apparatus 504 to thereby execute the program. The apparatus 504 may be arranged to receive directly or indirectly or otherwise acquire from the scanner 502 the volumetric dataset 510.

The apparatus 504 may be arranged to transmit information, for example, values defining a rendering of the volumetric dataset 510, for example, a color value for each pixel in an image plane, to a visualization unit 514. The transmission may be direct or indirect, for example via a wired connection, a wireless connection, or via the internet.

The visualization unit 514 may comprise visualization software for displaying a two-dimensional projection of the volumetric dataset 510 produced by the apparatus 504. The visualization unit 514 may comprise a display screen, and one or more graphics hardware or software components. In some examples, the visualization unit 514 may be or comprise a mobile device. In some examples the visualization unit 514 may comprise a virtual reality or augmented reality device. The visualization unit 514 may in some examples display a stereo image.

In certain examples described above, each time a physically based rendering process is performed it is performed on a combination of first volume data at a first data size per unit volume resolution and second volume data at a second data size per unit volume. However, in some examples, the physically based rendering process may be performed on a combination of volume data including further volume data in addition to the first volume data and the second volume data.

As an example, the physically based rendering process may be performed on volume data representing different parts of the volumetric dataset at different data sizes per unit volume. One such example is where the volume data representing the volumetric dataset is drawn from a resolution pyramid. In some such examples, the resolution pyramid may be arranged as an octree in which each part of the volumetric dataset is represented at a plurality of different resolutions. To obtain the volume data to be used to render the volumetric dataset, volume data may be selected from the octree and loaded into memory. The selected volume data may represent different parts of the volume at one or more different resolutions. The resolution or resolutions at which each particular part of the volumetric dataset is represented may, for example, depend on a determined importance of part of the volumetric dataset. For example, parts of the volume including a high level of detail may be selected to be represented at high resolution while parts of the volume with lower amounts of detail may be represented at lower resolution. Alternatively, or additionally, the resolution or resolutions at which the particular part of the volume is represented may depend on a position of the viewpoint, for example, parts of the volume further from the viewpoint may be represented at a lower resolution.

In some examples described above, including, for example, examples where a resolution pyramid is used, at a given sampling point along a given path, the volume data which is selected depends on a count of scatter events along the path prior to the sampling event. That is, the number of scatter events occurring for the path between the viewpoint and the given sampling point. For example, the highest resolution volume data may be selected to compute volume values for sampling points occurring prior to a first scattering event, while lower resolution volume data may be selected to compute volume values for sampling points following one or more scattering events. Additionally, or alternatively, lower resolution data may be selected as the distance from the sampling point to the position of the first scatter event along the path increases.

Although in certain examples described above the second portion of the volume is the entirety of the volume represented by the volumetric dataset, in other examples, the second portion of the volume may be a portion of the volume which is at least partially outside of the first portion of the volume, but which does not include the entire volume.

Although in certain example path tracing methods described above, sampling points are equidistantly spaced, in examples the sampling points may be spaced by variable amounts. For example, techniques such as jittering may be applied such that the sampling points are substantially equidistantly spaced with a small, variable, for example, pseudo-random, offset being applied to each sampling position. Such techniques may help to avoid artifacts by introducing small variations between the sampling positions for different paths.

Although in certain examples described above, a determination process is performed during the physically based rendering process to determine whether to continue with path tracing of a given path, in other examples, respective visual parameter data contributions may be computed for all paths. A selection process may then be performed to select, from the generated visual parameter data contributions, which are to be used to generate the overall visual parameter data value for the given pixel.

In certain examples described above, the data size per unit volume is a constant value across a particular volume data, for example, the first volume data or the second volume data. However, in other examples, the data size per unit volume may vary across volume data. For example, the first data size per unit volume of the first volume data and/or the second data size per unit volume of the second volume data may vary across the first volume data and the second volume data respectively while the average of the second data size per unit volume is lower than the average of the first data size per unit volume.

Independent of the grammatical term usage, individuals with male, female or other gender identities are included within the term.

The above embodiments are to be understood as illustrative examples of the invention. Other embodiments are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A computer-implemented method (100) for use in rendering a volumetric dataset representing a volume (200), the method comprising:
obtaining (102) first volume data representing a first portion (210) of the volume (200) represented by the volumetric dataset;
obtaining (104) second volume data representing a second portion (220) of the volume (200) represented by the volumetric dataset, wherein at least some of the second portion (220) of the volume (200) is outside of the first portion (210) of the volume (200), and wherein a second data size per unit volume of the second volume data is lower than a first data size per unit volume of the first volume data; and
performing (106) a first physically based rendering process on a combination of the first volume data and the second volume data to generate first visual parameter data for rendering the volumetric dataset.

2. The method of claim 1, wherein a second resolution of the second volume data is lower than a first resolution of the first volume data and/or wherein a second volume data precision of the second volume data is lower than a first volume data precision of the first volume data.

3. The method of claim 1 or claim 2, wherein the first physically based rendering process comprises a path tracing process.

4. The method of claim 3, wherein the path tracing process comprises, for a given path (230) traced during the path tracing process, performing a sampling process at one or more sampling points along the given path (230), the sampling process comprising:
selecting, at a given sampling point of the one or more sampling points, at least one of the first volume data and the second volume data; and
computing, for the given sampling point, a volume value based on the selected volume data.

5. The method of claim 4, wherein the selecting is based on at least a position of the sampling point with respect to the volume (200).

6. The method of claim 5, wherein the selecting comprises:
determining if the first volume data is available at the given sampling point; and
responsive to determining that the first volume data is available at the given sampling point, selecting the first volume data; and
responsive to determining that the first volume data is not available at the given sampling point, selecting the second volume data.

7. The method of any of claims 4 to 6, wherein the selecting is based on a count of scatter events, for the given path (230), between a viewpoint (10) of the path tracing process and the given sampling point.

8. The method of any of claims 3 to 6, wherein the path tracing process comprises:
for a or the given path (230) traced during the path tracing process, the given path (230) being associated with a given location in a viewing surface (20) comprising a plurality of locations:
performing a determination process to determine whether the given path (230) is to contribute a visual parameter data contribution to visual parameter data to be stored in associated with the given location.

9. The method of claim 8, wherein the determination process comprises determining whether the given path (230) is to contribute a visual parameter data contribution to the visual parameter data to be stored in association with the given location based on a data size per unit volume of volume data sampled at a given sampling point along the path.

10. The method of claim 9, wherein the path tracing process comprises determining an accumulated opacity value along the given path (230), wherein the given sampling point along the given path (230) is a sampling point at which the accumulated opacity value along the given path (230) meets a pre-determined opacity threshold, and wherein the determination process comprises determining that the given path (230) is not to contribute a visual parameter data contribution to the visual parameter data to be stored in association with the given location responsive to a determination that the data size per unit volume of volume data sampled at the given sampling point is the second data size per unit volume.

11. The method of any preceding claim, comprising:
obtaining second visual parameter data for rendering the volumetric dataset;
generating composited visual parameter data from the first visual parameter data and the second visual parameter data; and
using the composited visual parameter data to generate a rendering of the volumetric dataset.

12. The method of any preceding claim, wherein the obtaining the second visual parameter data comprises:
obtaining third volume data representing a third portion of the volume (200) represented by the volumetric dataset;
obtaining fourth volume data representing a fourth portion of the volume (200) represented by the volumetric dataset, wherein at least some of the fourth portion of the volume (200) is outside of the first portion of the volume (200), and wherein at least some of the third portion of the volume (200) is outside of the first portion, and wherein a fourth data size per unit volume of the fourth volume data is lower than a third data size per unit volume of the third volume data; and
performing a second physically based rendering process on a combination of the third volume data and the fourth volume data to generate second visual parameter data for rendering the volumetric dataset.

13. A set of machine-readable instructions which when executed by at least one processor (506) cause a method (100, 400) according to any of claims 1 to 12 to be performed.

14. Apparatus (501) comprising one or more processors (506) and one or more storages (508) comprising a set of machine-readable instructions according to claim 13.

15. A system for rendering a volumetric dataset representing a volume (200), the system comprising a master compute node, and two or more further compute nodes comprising at least a first further compute node and a second further compute node;
wherein the first further compute node is configured to:
obtain (102) first volume data representing a first portion (210) of the volume (200) represented by the volumetric dataset;
obtain (104) second volume data representing a second portion (220) of the volume (200) represented by the volumetric dataset, wherein at least some of the second portion (220) of the volume (200) is outside of the first portion (210) of the volume (200), and wherein a second data size per unit volume of the second volume data is lower than a first data size per unit volume of the first volume data; and
perform (106) a first physically based rendering process on a combination of the first volume data and the second volume data to generate first visual parameter data for rendering the volumetric dataset;
wherein the second further compute node is configured to:
obtain third volume data representing a third portion of the volume (200) represented by the volumetric dataset;
obtain fourth volume data representing a fourth portion of the volume (200) represented by the volumetric dataset, wherein at least some of the fourth portion of the volume is outside of the first portion of the volume, and wherein at least some of the third portion of the volume is outside of the first portion, and wherein a fourth data size per unit volume of the fourth volume data is lower than a third data size per unit volume of the third volume data; and
perform a second physically based rendering process on a combination of the third volume data and the fourth volume data to generate second visual parameter data for rendering the volumetric dataset; and
wherein the master compute node is configured to:
obtain the first visual parameter data from the first further compute node;
obtain the second visual parameter data from the second further compute node; and
use the visual parameter data to generate a rendering of the volumetric dataset.
